# EUROPÄISCHE PATENTANMELDUNG

(11) **EP 4 782 128 A1**
(43) Veröffentlichungstag der Anmeldung: **29.07.2026**
(21) Anmeldenummer: 25153455.8
(22) Anmeldetag: 23.01.2025
(51) Int. Cl.: B22F 10/366, B22F 5/10, B22F 10/28, B33Y 10/00, B33Y 50/02, B33Y 80/00

(54) **ADDITIVE FERTIGUNG EINES METALLROHRS**

(71) Anmelder: Heraeus Precious Metals GmbH & Co. KG, 63450 Hanau (DE)
(72) Erfinder: Protzmann, Tim, 63450 Hanau (DE); Fischer, Jakob, 63450 Hanau (DE)
(74) Vertreter: Heraeus IP

(57) **Zusammenfassung**

Die vorliegende Erfindung betrifft ein Verfahren zur Herstellung eines Metallrohrs, umfassend
(a) eine rechnergestützte Bereitstellung und Übermittlung von Daten, umfassend
(a1) eine Bereitstellung eines 3D-Modells eines Hohlzylinders,
(a2) eine Zerlegung des 3D-Modells des Hohlzylinders in einzelne virtuelle Schichten,
(a3) ein Festlegen von Belichtungsstrecken für die Querschnittsflächen des Hohlzylinders in den virtuellen Schichten, wobei in mindestens zwei aufeinanderfolgenden virtuellen Schichten die Belichtungsstrecken jeweils radiale Belichtungsstrecken umfassen,
(a4) eine Übertragung der Daten der Schritte (a1) bis (a3) an eine additive Fertigungsvorrichtung,

(b) ein pulverbettbasiertes Laser- oder Elektronenstrahlschmelzen in der additiven Fertigungseinrichtung unter Herstellung des Metallrohrs, umfassend ein aufeinanderfolgendes schichtweises Aufbringen eines Metallpulvers, wobei in mindestens zwei aufeinanderfolgenden Schichten des Metallpulvers ein Schmelzen des Metallpulvers in definierten Bereichen der Schicht erfolgt, indem ein Laser- oder Elektronenstrahl über die in Schritt (a3) festgelegten Belichtungsstrecken geführt wird.

## Beschreibung

### Technisches Gebiet

Die vorliegende Erfindung betrifft ein Verfahren zur Herstellung eines Metallrohrs durch ein pulverbettbasiertes Strahlschmelzen.

### Hintergrund der Erfindung

Das Selektive Laserschmelzen (SLM^{®}) ist ein additives Fertigungsverfahren aus der Gruppe der pulverbettbasierten Strahlschmelzerfahren und wird daher auch als pulverbettbasiertes Laserstrahlschmelzen (engl.: "*Laser Powder Bed Fusion",* LPBF) bezeichnet. Sofern metallische Formteile unter Verwendung von Metallpulvern hergestellt werden, wird das additive Verfahren auch mit folgender Abkürzung versehen: PBF-LB/M (engl.: "*Laser-Based Powder Bed Fusion of Metals").* Die Fertigung erfolgt durch schichtweises Auftragen dünner Pulverschichten und einem lokalen Aufschmelzen des Metallpulvers in definierten Bereichen der jeweiligen Schicht. Ein Laserstrahl wird über definierte Belichtungsstrecken (manchmal auch als Scanlinien oder Scanvektoren bezeichnet) geführt und erzeugt Schmelzspuren. Durch einen sich wiederholenden Zyklus aus Pulverauftrag und selektivem Belichten und Aufschmelzen definierter Bereiche entsteht schichtweise das gewünschte Bauteil.

Ausgangspunkt für den Fertigungsprozess ist üblicherweise die Bauteilkonstruktion in einem CAD-Programm oder einem geeigneten Modellierungsprogramm. Anschließend wird das 3D-Modell in einzelne Schichten unterteilt. Für die virtuellen Schichten werden geeignete Fertigungsparameter festgelegt und an die additive Fertigungsanlage übertragen.

Einer der Fertigungsparameter beinhaltet das Festlegen von Belichtungsstrecken, über die ein Laser- oder Elektronenstrahl im anschließenden additiven Herstellungsprozess geführt wird, so dass in definierten Bereichen jeder Pulverschicht ein Schmelzen und anschließendes Verfestigen des Materials realisiert wird. Der Materialbereich, der entlang einer Belichtungsstrecke durch den Laser- oder Elektronenstrahl geschmolzen wird und sich anschließend wieder verfestigt, wird als Schmelzspur bezeichnet. Benachbarte Schmelzspuren überlappen üblicherweise und die Gesamtheit der Schmelzspuren bildet das Bauteil. Das Festlegen einer bestimmten Anordnung von Belichtungsstrecken wird manchmal als Scanstrategie bezeichnet. Für unterschiedliche Bauteilgeometrien kann es erforderlich sein, unterschiedliche Scanstrategien zu wählen.

Scanstrategien für die additive Fertigung durch ein pulverbettbasiertes Laserstrahlschmelzen werden beispielsweise in folgenden Publikationen beschrieben:
- Jia, H., Sun, H., Wang, H. et al.; "Scanning strategy in selective laser melting (SLM): a review", Int J Adv ManufTechnol, 113, 2413-2435 (2021);
- J. Robinson et al., "Determination of the effect of scan strategy on residual stress in laser powder bed fusion additive manufacturing", Additive Manufacturing, 23, 2018, S. 13-24;
- Paraschiv, A.; Matache, G.; Constantin, N.; Vladut, M.; "Investigation of Scanning Strategies and Laser Remelting Effects on Top Surface Deformation of Additively Manufactured IN 625"; Materials, 2022, 15, 3198.

Eine Herausforderung, die sich bei der Herstellung metallischer Formteile durch ein pulverbettbasiertes Laserstrahlschmelzen stellt, ist die Vermeidung einer Porenbildung im Formteil (insbesondere einer Bildung von geschlossenen Poren im Inneren des Formteils). Durch die Anwesenheit solcher Poren können sich die mechanischen Eigenschaften des Formteils verschlechtern.

Es ist bekannt, dass sich während eines pulverbettbasierten Strahlschmelzprozesses sogenannte "Keyhole"-Poren ausbilden können. Die Bildung dieser Keyhole-Poren lässt sich folgendermaßen erklären: Das durch den Laserstrahl erhitzte Metallpulver schmilzt. Bei hohen Energiedichten des Lasers kann das geschmolzene Metall verdampfen und eine Dampfkapillare (ein sog. "Keyhole") bilden. Diese Dampfkapillare entsteht durch den hohen Druck des Metalldampfs, der das geschmolzene Metall seitlich verdrängt. Die Dampfkapillare ist ein tiefer, schmaler Bereich, der von geschmolzenem Metall umgeben ist. Wenn die Dampfkapillare instabil wird, können die Wände der Dampfkapillare kollabieren und die Dampfkapillare schließt sich abrupt. Beim Kollaps der Dampfkapillare können Gasblasen im geschmolzenen Metall eingeschlossen werden. Diese Gasblasen können nicht entweichen und erstarren in der Schmelze, was zur Bildung von Keyhole-Poren führt. Während das Metall abkühlt und erstarrt, bleiben diese eingeschlossenen Gasblasen als Poren im festen Material zurück.

Mögliche Mechanismen der Ausbildung von "Keyhole"-Poren werden beispielsweise in der folgenden Publikation beschrieben:
- Wang, L., Zhang, Y., Chia, H.Y. et al.; "Mechanism of keyhole pore formation in metal additive manufacturing"; npj Comput Mater, 8, 22 (2022).

Für Bauteile, die dünnwandige und gekrümmte Abschnitte aufweisen (wie z.B. dünnwandige Rohre), bleibt es eine Herausforderung, die Ausbildung von Poren während der additiven Fertigung möglichst effizient zu vermeiden.

EP 3 804 884 A1 beschreibt die additive Fertigung eines dünnwandigen Rohrs durch ein pulverbettbasiertes Laser- oder Elektronenstrahlschmelzen. Dieses Verfahren umfasst (a) ein Auftragen einer Schicht aus einem Metallpulver auf ein Substrat, (b) ein Belichten definierter Bereiche der Schicht mit einem Laser- oder Elektronenstrahl, wodurch das Metallpulver, das Teil des dünnwandigen Metallrohrs wird, geschmolzen wird, wobei das Belichten Folgendes umfasst: (b1) Bewegen des Strahls entlang einer Außenwand-Belichtungsstrecke SL_{ows}, wodurch das Pulver geschmolzen wird, das sich an der Außenwandfläche des dünnwandigen Metallrohrs befindet; (b2) Bewegen des Strahls entlang einer Innenwand-Belichtungsstrecke SL_{IWS}, wodurch das Pulver geschmolzen wird, das sich an der Innenwandfläche des dünnwandigen Metallrohrs befindet; (b3) Bewegen des Strahls entlang von inneren Belichtungsstrecken SL_{Bulk}, wodurch das Pulver geschmolzen wird, das sich im Inneren der Rohrwand befindet.

Eine Aufgabe der vorliegenden Erfindung ist die Herstellung eines Metallrohrs über ein additives Verfahren, das zu einer porenarmen oder sogar einer im Wesentlichen porenfreien Rohrwand führt.

### Zusammenfassung der Erfindung

Gelöst wird die Aufgabe durch ein Verfahren zur Herstellung eines Metallrohrs, umfassend
(a) eine rechnergestützte Bereitstellung und Übermittlung von Daten, umfassend
   (a1) eine Bereitstellung eines 3D-Modells eines Hohlzylinders,
   (a2) eine Zerlegung des 3D-Modells des Hohlzylinders in einzelne virtuelle Schichten, wobei jede virtuelle Schicht eine Querschnittsfläche des Hohlzylinders umfasst und die Querschnittsfläche durch eine äußere Konturlinie und eine innere Konturlinie begrenzt ist,
   (a3) ein Festlegen von Belichtungsstrecken für die Querschnittsflächen des Hohlzylinders in den virtuellen Schichten, wobei die Belichtungsstrecken in mindestens zwei aufeinanderfolgenden virtuellen Schichten radiale Belichtungsstrecken umfassen und jede der radialen Belichtungsstrecken folgenden Bedingungen genügt:
      - die radiale Belichtungsstrecke wird durch zwei Endpunkte P begrenzt und eine gedachte Verlängerung der radialen Belichtungsstrecke ist eine Gerade, die durch ihre Endpunkte P verläuft,
      - die radiale Belichtungsstrecke liegt zwischen zwei zu ihr benachbarten radialen Belichtungsstrecken, wobei sich die radiale Belichtungsstrecke nicht mit ihren benachbarten radialen Belichtungsstrecken schneidet, aber die gedachte Verlängerung der radialen Belichtungsstrecke und die gedachte Verlängerung mindestens einer der beiden benachbarten radialen Belichtungsstrecken sich in einem Schnittpunkt S schneiden, wobei der Schnittpunkt S innerhalb der von der inneren Konturlinie umschlossenen Fläche liegt,
   (a4) eine Übertragung der Daten der Schritte (a1) bis (a3) an eine additive Fertigungsvorrichtung,
(b) ein pulverbettbasiertes Laser- oder Elektronenstrahlschmelzen in der additiven Fertigungseinrichtung unter Herstellung des Metallrohrs, umfassend ein aufeinanderfolgendes schichtweises Aufbringen eines Metallpulvers, wobei in mindestens zwei aufeinanderfolgenden Schichten des Metallpulvers ein Schmelzen des Metallpulvers in definierten Bereichen der Schicht erfolgt, indem ein Laser- oder Elektronenstrahl über die in Schritt (a3) festgelegten Belichtungsstrecken geführt wird.

Die vorliegende Erfindung betrifft außerdem ein Computerprogramm, umfassend Befehle, die bewirken, dass eine additive Fertigungsvorrichtung, die eine Laser- oder Elektronenstrahlquelle und Mittel zum schichtweisen Auftragen eines Metallpulvers umfasst, die Verfahrensschritte nach dem erfindungsgemäßen Verfahren ausführt.

Die vorliegende Erfindung betrifft außerdem ein Computerprogramm, umfassend Befehle, die bei der Ausführung des Programms durch einen Computer diesen veranlassen, die Schritte (a1) bis (a3) des erfindungsgemäßen Verfahrens durchzuführen.

### Kurze Beschreibung der Figuren

Die Figur 1 zeigt eine Querschnittsfläche eines kreisförmigen Hohlzylinders mit erfindungsgemäßen radialen Belichtungsstrecken, wobei sich benachbarte Belichtungsstrecken in einem gemeinsamen Schnittpunkt schneiden.
Die Figur 2 zeigt eine Querschnittsfläche eines kreisförmigen Hohlzylinders mit erfindungsgemäßen radialen Belichtungsstrecken, wobei sich benachbarte Belichtungsstrecken in separaten Schnittpunkten schneiden.
Die Figur 3 zeigt eine Querschnittsfläche eines kreisförmigen Hohlzylinders mit erfindungsgemäßen radialen Belichtungsstrecken, wobei sich benachbarte Belichtungsstrecken in einem gemeinsamen Schnittpunkt schneiden.
Die Figur 4 zeigt eine Querschnittsfläche eines ellipsenförmigen Hohlzylinders mit erfindungsgemäßen radialen Belichtungsstrecken.
Die Figur 5 zeigt erfindungsgemäße radiale Belichtungsstrecken, deren gedachte Verlängerungen sich unter einem Schnittwinkel θ schneiden.
Die Figur 6 zeigt erfindungsgemäße radiale Belichtungsstrecken in zwei aufeinanderfolgenden virtuellen Schichten.
Die Figur 7 zeigt erfindungsgemäße radiale Belichtungsstrecken und verbindende Belichtungsstrecken.
Die Figur 8 zeigt erfindungsgemäße radiale Belichtungsstrecken und Skywriting-Schleifen zwischen benachbarten radialen Belichtungsstrecken.
Die Figur 9 zeigt einen Querschnitt eines kreisförmigen Hohlzylinders mit nicht erfindungsgemäßen Belichtungsstrecken, wie sie in dem Vergleichsbeispiel VB1 verwendet wurden.
Die Figur 10 zeigt einen Schnitt durch eine Wand eines Metallrohrs, das mit dem erfindungsgemäßen Verfahren hergestellt wurde.
Die Figur 11 zeigt einen Schnitt durch eine Wand eines Metallrohrs, das durch das Vergleichsbeispiel VB1 hergestellt wurde.

### Detaillierte Beschreibung der Erfindung

Wie oben bereits erwähnt, hat es sich die vorliegende Erfindung zur Aufgabe gemacht, ein Metallrohr über ein additives Verfahren herzustellen, das zu einer porenarmen oder sogar einer im Wesentlichen porenfreien Rohrwand führt.

Gelöst wird die Aufgabe durch das in Anspruch 1 definierte Verfahren.

Im Rahmen der vorliegenden Erfindung wurde unter anderem erkannt, dass die Ausbildung von Poren (insbesondere Keyhole-Poren) in der Rohrwand während der additiven Fertigung des Metallrohrs verhindert oder zumindest signifikant reduziert werden kann, wenn benachbarte Belichtungsstrecken, über die der Laser- oder Elektronenstrahl zum Schmelzen des Metallpulvers geführt wird, nicht parallel zueinander verlaufen, sondern so gegeneinander verkippt sind, dass sie sich zwar nicht schneiden, ihre gedachten Verlängerungen sich aber in einem Schnittpunkt treffen, der innerhalb der von der inneren Konturlinie umschlossenen Fläche liegt. In Richtung der äußeren Konturlinie nimmt der Abstand der benachbarten Belichtungsstrecken zu. Die erfindungsgemäße Orientierung der radialen Belichtungsstrecken führt dazu, dass diese Belichtungsstrecken eine übereinstimmende oder zumindest ähnliche Länge aufweisen, was sich vorteilhaft auf die Materialdichte in der Wand des Metallrohrs auswirkt.

In Schritt (a1) des erfindungsgemäßen Verfahrens erfolgt eine rechnergestützte Bereitstellung eines 3D-Modells eines Hohlzylinders. Hierfür geeignete Computerprogramme sind dem Fachmann allgemein bekannt oder lassen sich auf Basis des allgemeinen Fachwissens erstellen. Wie jeder Zylinder weist der Hohlzylinder eine Zylinderachse auf. Der Hohlzylinder ist beispielsweise ein kreisförmiger oder ellipsenförmiger Hohlzylinder. Ein kreisförmiger Hohlzylinder weist senkrecht zur Zylinderachse eine Querschnittsfläche in Form eines kreisförmigen Rings (d.h. eines Rings, dessen Kontur durch zwei konzentrische Kreise definiert ist) auf. Ein elliptischer Hohlzylinder weist senkrecht zur Zylinderachse eine Querschnittsfläche in Form eines elliptischen Rings (d.h. eines Rings, dessen Kontur durch zwei konzentrische Ellipsen definiert ist) auf.

In Schritt (a2) erfolgt eine rechnergestützte Zerlegung des 3D-Modells des Hohlzylinders in einzelne virtuelle Schichten. Geeignete Computerprogramme für eine Zerlegung von 3D-Modellen geometrischer Körper in einzelne virtuelle Schichten sind dem Fachmann bekannt oder lassen sich auf Basis des allgemeinen Fachwissens erstellen. Jede der virtuellen Schichten weist beispielsweise eine Dicke im Bereich von 20 µm bis 150 µm auf.

In jeder der virtuellen Schichten ist eine Querschnittsfläche des Hohlzylinders festgelegt, wobei die Querschnittsfläche durch eine äußere geschlossene Konturlinie und eine innere geschlossene Konturlinie begrenzt ist. Beispielsweise weist die äußere Konturlinie von der inneren Konturlinie einen Abstand von 0,3 mm bis 5,0 mm, bevorzugter 0,5 mm bis 2,0 mm auf. Die äußere Konturlinie und die innere Konturlinie sind beispielsweise kreis- oder ellipsenförmig. Beispielsweise sind sowohl die äußere Konturlinie als auch die innere Konturlinie ein Kreis, wobei die Kreise konzentrisch zueinander angeordnet sein können. Alternativ können beispielsweise die äußere Konturlinie und innere Konturlinie jeweils eine Ellipse sein, wobei die Ellipsen konzentrisch zueinander angeordnet sein können.

Ist die geschlossene Konturlinie ein Kreis, so weist der Kreis einen Radius r_{K} und einen Durchmesser d_{K} = 2 × r_{K} auf. In einer beispielhaften Ausführungsform sind die innere Konturlinie und äußere Konturlinie Kreise, die konzentrisch zueinander angeordnet sind, wobei der Kreis der inneren Konturlinie einen Durchmesser d_{K-i} von mindestens 1,5 mm und der Kreis der äußeren Konturlinie einen Durchmesser d_{K-a} von höchstens 8,0 mm aufweist, unter der Maßgabe, dass der Abstand zwischen der inneren und äußeren kreisförmigen Konturlinie (d.h. die Differenz zwischen d_{K-a} und d_{K-i}) 0,3 mm bis 5 mm, bevorzugter 0,5 mm bis 2,0 mm beträgt.

Ist die geschlossene Konturlinie eine Ellipse, so weist sie (wie jede Ellipse) eine Hauptachse a mit einer Länge dₐ und eine Nebenachse mit einer Länge d_{b} auf, wobei sich ein Achsenverhältnis AV = dₐ/d_{b} und eine Achsendifferenz AD = dₐ - d_{b} ergeben. Die Hauptachse und Nebenachse schneiden sich im Mittelpunkt der Ellipse. Sofern die Ellipsen der inneren und äußeren ellipsenförmigen Konturlinien konzentrisch zueinander angeordnet sind, fallen deren Mittelpunkte in einem gemeinsamen Mittelpunkt zusammen. Die Ellipse der äußeren Konturlinie und die Ellipse der inneren Konturlinie können beispielsweise ein identisches Achsenverhältnis oder alternativ ein unterschiedliches Achsenverhältnis aufweisen. Beispielsweise gilt für das Achsenverhältnis der Ellipsen der äußeren und inneren Konturlinie jeweils Folgendes: AV ≤ 1,2. Außerdem können die Ellipse der äußeren Konturlinie und die Ellipse der inneren Konturlinie beispielsweise eine identische Achsendifferenz oder alternativ eine unterschiedliche Achsendifferenz aufweisen. Beispielsweise verlaufen die äußere ellipsenförmige Konturlinie und die innere ellipsenförmige Konturlinie parallel zueinander. In einer beispielhaften Ausführungsform sind die innere Konturlinie und äußere Konturlinie Ellipsen, die konzentrisch zueinander angeordnet, wobei die Ellipse der inneren Konturlinie eine Hauptachse mit einer Länge dₐ von mindestens 1,5 mm und die Ellipse der äußeren Konturlinie eine Hauptachse mit einer Länge dₐ von höchstens 8,0 mm aufweist, unter der Maßgabe, dass jeder gedachte Punkt auf der inneren Konturlinie gegenüber der äußeren Konturlinie einen Abstand von mindestens 0,3 mm, aber nicht mehr als 5,0 mm, bevorzugter mindestens 0,5 mm, aber nicht mehr als 2,0 mm aufweist. Der Abstand ist die kürzeste Verbindungslinie, die diesen Punkt mit der äußeren ellipsenförmigen Konturlinie verbindet.

Die virtuellen Schichten sind üblicherweise senkrecht zur Baurichtung des zu fertigenden Bauteils (d.h. des Metallrohrs) orientiert.

Die Zylinderachse des Hohlzylinders ist bevorzugt parallel zur Baurichtung des zu fertigenden Metallrohrs ausgerichtet. Im Rahmen der vorliegenden Erfindung ist es aber auch möglich, dass die Zylinderachse des Hohlzylinders gegenüber der Baurichtung des zu fertigenden Metallrohrs verkippt ist, beispielsweise um bis zu 15°, bevorzugter um nicht mehr als 5°. Beispielsweise schneidet die Zylinderachse des Hohlzylinders die virtuellen Schichten unter einem Winkel von 75° bis 90°, bevorzugter 85° bis 90°, besonders bevorzugt 90°.

In Schritt (a3) des erfindungsgemäßen Verfahrens erfolgt ein rechnergestütztes Festlegen von Belichtungsstrecken für die Querschnittsflächen des Hohlzylinders in den virtuellen Schichten.

Eine Belichtungsstrecke ist eine virtuelle Strecke, über die im späteren additiven Fertigungsschritt (b) ein Laser- oder Elektronenstrahl geführt wird, so dass ein von dem Laser- oder Elektronenstrahl bestrahltes Material (insbesondere ein Metallpulver) schmilzt.

In mindestens zwei aufeinanderfolgenden virtuellen Schichten, bevorzugter in mindestens vier aufeinanderfolgenden virtuellen Schichten, noch bevorzugter in allen virtuellen Schichten umfassen die Belichtungsstrecken jeweils radiale Belichtungsstrecken, wobei für jede radiale Belichtungsstrecke einer virtuellen Schicht Folgendes gilt:
- Die radiale Belichtungsstrecke wird durch Endpunkte P begrenzt und eine gedachte Verlängerung der radialen Belichtungsstrecke verläuft durch ihre Endpunkte P,
- die radiale Belichtungsstrecke liegt zwischen zwei zu ihr benachbarten radialen Belichtungsstrecken (d.h. sie weist zu ihrer linken Seite und rechten Seite jeweils eine benachbarte radiale Belichtungsstrecke auf), wobei die radiale Belichtungsstrecke sich nicht mit ihren benachbarten radialen Belichtungsstrecken schneidet, aber die gedachte Verlängerung der radialen Belichtungsstrecke und die gedachte Verlängerung mindestens einer der beiden benachbarten radialen Belichtungsstrecken sich in einem Schnittpunkt S schneiden, wobei der Schnittpunkt S innerhalb der von der inneren Konturlinie umschlossenen Fläche liegt.

Jede radiale Belichtungsstrecke wird durch Endpunkte P begrenzt (d.h. sie erstreckt sich von einem Endpunkt zum anderen Endpunkt). In einer bevorzugten Ausführungsform verläuft jede radiale Belichtungsstrecke geradlinig. Im Rahmen der vorliegenden Erfindung ist es allerdings auch möglich, dass zumindest manche der radialen Belichtungsstrecken beispielsweise zickzackförmig oder wellenförmig verlaufen.

Beispielsweise erfüllen mindestens 60%, bevorzugter mindestens 80% der radialen Belichtungsstrecken, noch bevorzugter alle radialen Belichtungsstrecken einer virtuellen Schicht die folgende Bedingung: Die gedachte Verlängerung der radialen Belichtungsstrecke schneidet die gedachten Verlängerungen ihrer beiden benachbarten radialen Belichtungsstrecken in einem gemeinsamen Schnittpunkt S oder in separaten Schnittpunkten S.

In einer beispielhaften Ausführungsform gilt für jede radiale Belichtungsstrecke in einer der virtuellen Schichten Folgendes: Die gedachte Verlängerung der radialen Belichtungsstrecke und die gedachte Verlängerung mindestens einer der beiden benachbarten radialen Belichtungsstrecken schneiden sich in dem Schnittpunkt S unter einem Schnittwinkel θ, wobei der Schnittwinkel θ maximal 8°, bevorzugter maximal 5° beträgt.

In einer beispielhaften Ausführungsform weisen die von der inneren Begrenzungslinie umschlossene Fläche und die von der äußeren Begrenzungslinie umschlossene Fläche einen gemeinsamen Mittelpunkt M auf und jeder Schnittpunkt S, in dem sich die gedachte Verlängerung einer der radialen Belichtungsstrecken und die gedachte Verlängerung mindestens einer ihrer benachbarten radialen Belichtungsstrecken schneiden, fällt mit dem Mittelpunkt M zusammen oder weist vom Mittelpunkt M einen Abstand d(S-M) aufweist, wobei d(S-M) der folgenden Bedingung genügt:
d(S-M) ≤ 0,8 × dₘᵢₙ; wobei dₘᵢₙ der minimale Abstand des Mittelpunkts M zur inneren Konturlinie ist.

In einer beispielhaften Ausführungsform sind die innere und äußere Begrenzungslinie jeweils ein Kreis oder eine Ellipse, wobei die beiden Kreise oder die beiden Ellipsen konzentrisch zueinander angeordnet sind und einen gemeinsamen Mittelpunkt M aufweisen und jeder Schnittpunkt S, in dem sich die gedachte Verlängerung einer der radialen Belichtungsstrecken und die gedachte Verlängerung mindestens einer ihrer benachbarten radialen Belichtungsstrecken schneiden, fällt mit dem Mittelpunkt M zusammen oder weist vom Mittelpunkt M einen Abstand d(S-M) auf, wobei d(S-M) beispielsweise der folgenden Bedingung genügt: d(S-M) ≤ 0,8 × dₘᵢₙ; bevorzugter d(S-M) ≤ 0,4 × dₘᵢₙ; wobei dₘᵢₙ der minimale Abstand des Mittelpunkts M zur inneren Konturlinie ist. Sofern die innere Konturlinie ein Kreis ist, gilt Folgendes: dₘᵢₙ = r_{K}, wobei r_{K} der Radius des Kreises ist. Sofern die innere Konturlinie eine Ellipse ist, gilt Folgendes: dₘᵢₙ = 0,5 × d_{b}, wobei d_{b} die Länge der Nebenachse der Ellipse ist.

Jede radiale Belichtungsstrecke ist durch ihre beiden Endpunkte P begrenzt.

Beispielsweise liegt einer der beiden Endpunkte auf der inneren Konturlinie oder weist zu der inneren Konturlinie einen Abstand d₁ auf und liegt der andere Endpunkt auf der äußeren Konturlinie oder weist zu der äußeren Konturlinie einen Abstand d₂ auf, wobei d₁ ≤ 5 × d_{LF} und d₂ ≤ 5 × d_{LF} und d_{LF} ein Fokusdurchmesser eines in Schritt (b) zu verwendenden Laser- oder Elektronenstrahls ist.

In einer beispielhaften Ausführungsform gilt für jede radiale Belichtungsstrecke Folgendes: Die Endpunkte P liegen innerhalb der Querschnittsfläche des Hohlzylinders, wobei einer der beiden Endpunkte zu der inneren Konturlinie einen Abstand d₁ ≤ 5 × d_{LF} aufweist und der andere Endpunkt zu der äußeren Konturlinie einen Abstand d₂ ≤ 5 × d_{LF} aufweist. Beispielsweise genügen d₁ und d₂ der folgenden Bedingung: 0,9 × d₁ ≤ d₂ ≤ 1,1 × d₁; bevorzugter: d₁ = d₂.

In einer weiteren beispielhaften Ausführungsform gilt für jede radiale Belichtungsstrecke Folgendes: Einer der beiden Endpunkte liegt auf der inneren Konturlinie und der andere Endpunkt liegt auf der äußeren Konturlinie.

In einer weiteren beispielhaften Ausführungsform gilt für jede radiale Belichtungsstrecke Folgendes: Die beiden Endpunkte P liegen außerhalb der Querschnittsfläche des Hohlzylinders, wobei einer der beiden Endpunkte zu der inneren Konturlinie einen Abstand d₁ ≤ 5 × d_{LF} aufweist und der andere Endpunkt zu der äußeren Konturlinie einen Abstand d₂ ≤ 5 × d_{LF} aufweist. Beispielsweise genügen d₁ und d₂ der folgenden Bedingung: 0,9 × d₁ ≤ d₂ ≤ 1,1 × d₁; bevorzugter: d₁ = d₂.

In einer weiteren beispielhaften Ausführungsform gilt für jede radiale Belichtungsstrecke Folgendes: Einer der beiden Endpunkte liegt außerhalb der Querschnittsfläche des Hohlzylinders, während der andere Endpunkt innerhalb der Querschnittsfläche des Hohlzylinders liegt, wobei einer der beiden Endpunkte zu der inneren Konturlinie einen Abstand d₁ ≤ 5 × d_{LF} aufweist und der andere Endpunkt zu der äußeren Konturlinie einen Abstand d₂ ≤ 5 × d_{LF} aufweist. Beispielsweise genügen d₁ und d₂ der folgenden Bedingung: 0,9 × d₁ ≤ d₂ ≤ 1,1 × d₁; bevorzugter: d₁ = d₂.

In einer beispielhaften Ausführungsform gilt für jede radiale Belichtungsstrecke Folgendes: Die radiale Belichtungsstrecke oder die gedachte Verlängerung der radialen Belichtungsstrecke steht im Wesentlichen senkrecht auf der inneren Konturlinie und/oder der äußeren Konturlinie. Im Wesentlichen senkrecht bedeutet einen Winkel, der um maximal 5°, bevorzugter maximal 2° von einem rechten Winkel abweicht. In dieser beispielhaften Ausführungsform sind die innere und äußere Begrenzungslinie bevorzugt jeweils kreisförmig und konzentrisch zueinander angeordnet.

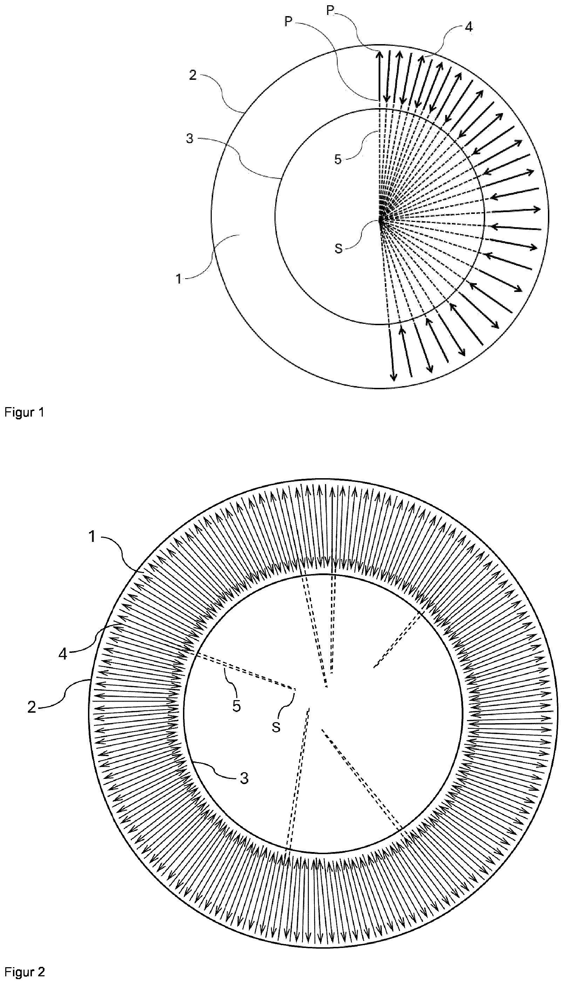

Figur 1 veranschaulicht eine beispielhafte Ausführungsform, in der die Querschnittsfläche 1 eines kreisförmigen Hohlzylinders in einer der virtuellen Schichten durch eine äußere Konturlinie 2 und eine innere Konturlinie 3 begrenzt ist, wobei die Konturlinien 2 und 3 konzentrisch zueinander sind (d.h. einen gemeinsamen Mittelpunkt M aufweisen), und die radialen Belichtungsstrecken 4 so angeordnet sind, dass sich benachbarte radiale Belichtungsstrecken 4 nicht schneiden, ihre gedachten Verlängerungen 5 jedoch in einem Schnittpunkt S, der innerhalb der von der inneren Konturlinie 3 umschlossenen Fläche liegt, treffen. Aus Gründen der vereinfachten Darstellung zeigt Figur 1 nur die radialen Belichtungsstrecken 4 in der rechten Hälfte der ringförmigen Querschnittsfläche 1. Durch die Pfeilrichtung einer radialen Belichtungsstrecke 4 wird veranschaulicht, in welcher Richtung ein Laser- oder Elektronenstrahl im späteren additiven Fertigungsschritt über die Belichtungsstrecke 4 geführt wird. In der in Figur 1 veranschaulichten Ausführungsform schneiden sich alle gedachten Verlängerungen in einem gemeinsamen Schnittpunkt S und dieser Schnittpunkt S fällt mit dem Mittelpunkt M der Konturlinien 2 und 3 zusammen. Im Rahmen der vorliegenden Erfindung ist es aber auch möglich, dass getrennte Schnittpunkte vorliegen, unter der Maßgabe, dass jeder der Schnittpunkte S innerhalb der von der inneren Konturlinie umschlossenen Fläche liegt. Eine beispielhafte Ausführungsform, in der getrennte Schnittpunkte S vorliegen, wird in Figur 2 veranschaulicht.

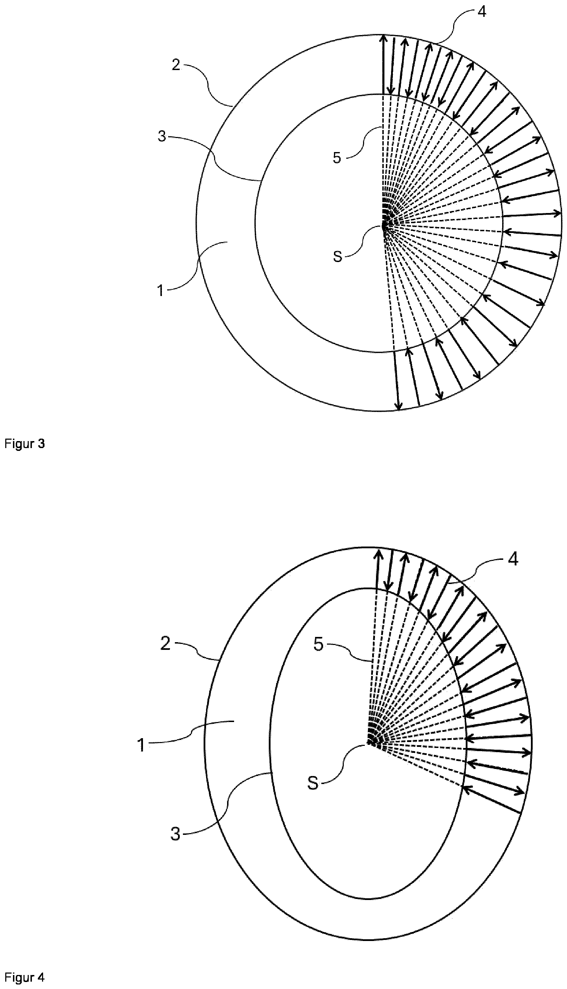

In den in Figur 1 und Figur 2 veranschaulichten Ausführungsformen weisen die Endpunkte P jeder radialen Belichtungsstrecke 4 einen gewissen Abstand zu den inneren und äußeren Konturlinien 2 und 3 auf. Dieser Abstand kann beispielsweise so gewählt sein, dass im anschließenden additiven Fertigungsschritt die Pulverschicht bis zu den Konturlinien 2 und 3, aber nicht darüber hinaus geschmolzen wird. Für diesen Fall entsprechen die Innen- und Außenkonturen des additiv hergestellten Metallrohrs im Wesentlichen den Innen- und Außenkonturen des virtuellen Hohlzylinders. Im Rahmen der vorliegenden Erfindung ist es aber beispielsweise auch möglich, dass sich die radialen Belichtungsstrecken bis zu den inneren und äußeren Konturlinien des Hohlzylinders erstrecken oder sogar in festgelegter Weise über diese Konturlinien hinausgehen, so dass die Innen- und Außenkonturen des additiv hergestellten Metallrohrs gegenüber den Innen- und Außenkonturen des virtuellen Hohlzylinders in festgelegter Weise nach außen verschoben sind. Radiale Belichtungsstrecken 4, die sich von der inneren Konturlinie 3 bis zur äußeren Konturlinie 2 erstrecken, sind in Figur 3 veranschaulicht.

Figur 4 veranschaulicht eine beispielhafte Ausführungsform, in der die Querschnittsfläche 1 eines ellipsenförmigen Hohlzylinders in einer der virtuellen Schichten durch eine äußere Konturlinie 2 und eine innere Konturlinie 3 begrenzt ist, wobei die Konturlinien 2 und 3 konzentrisch zueinander sind (d.h. einen gemeinsamen Mittelpunkt M aufweisen), und die radialen Belichtungsstrecken 4 so angeordnet sind, dass sich benachbarte radiale Belichtungsstrecken 4 nicht schneiden, ihre gedachten Verlängerungen 5 jedoch in einem Schnittpunkt S, der innerhalb der von der inneren Konturlinie 3 umschlossenen Fläche liegt, treffen.

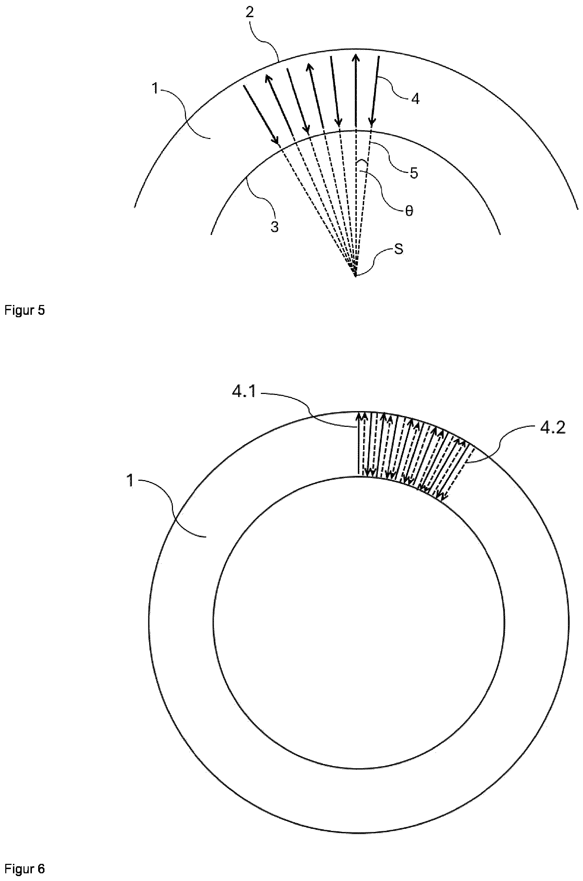

In Figur 5 wird veranschaulicht, wie sich die gedachten Verlängerungen 5 benachbarter radialer Belichtungsstrecken 4 unter einem Schnittwinkel θ im Schnittpunkt S treffen.

In einer weiteren beispielhaften Ausführungsform sind die radialen Belichtungsstrecken in unmittelbar aufeinanderfolgenden virtuellen Schichten so angeordnet, dass in einer Draufsicht auf die virtuellen Schichten sich die Belichtungsstrecken nicht schneiden. Beispielsweise liegt in einer Draufsicht auf die beiden unmittelbar aufeinanderfolgenden virtuellen Schichten jede radiale Belichtungsstrecke der einen virtuellen Schicht zwischen zwei zueinander benachbarten radialen Belichtungsstrecken der anderen virtuellen Schicht. Dies wird in Figur 6 veranschaulicht. Die radialen Belichtungsstrecken 4.2 einer der virtuellen Schichten liegen jeweils zwischen zwei benachbarten radialen Belichtungsstrecken 4.1 der anderen virtuellen Schicht.

In Schritt (a3) des Verfahrens kann beispielsweise eine Bewegungsrichtung eines Laser- oder Elektronenstrahls in Bezug auf die Belichtungsstrecken festgelegt werden. In einer beispielhaften Ausführungsform wird in Schritt (a3) des Verfahrens für jede radiale Belichtungsstrecke eine Bewegungsrichtung eines Laser- oder Elektronenstrahls festgelegt, so dass der Laser- oder Elektronenstrahl beispielsweise in Richtung der Außenkonturlinie oder alternativ in Richtung der Innenkonturlinie zu bewegen ist.

Beispielsweise werden für benachbarte radiale Belichtungsstrecken in einer virtuellen Schicht entgegengesetzte Bewegungsrichtungen des Laser- oder Elektronenstrahls festgelegt.

Optional können die in Schritt (a3) festgelegten Belichtungsstrecken neben den radialen Belichtungsstrecken verbindende Belichtungsstrecken umfassen. Eine verbindende Belichtungsstrecke verbindet einen der Endpunkte einer radialen Belichtungsstrecke mit dem nächstgelegenen Endpunkt einer der benachbarten radialen Belichtungsstrecken. Außerdem gilt beispielsweise Folgendes: Von einer radialen Belichtungsstrecke gehen nicht mehr als zwei verbindende Belichtungsstrecken aus und von einem Endpunkt einer radialen Belichtungsstrecke geht nicht mehr als eine verbindende Belichtungsstrecke aus.

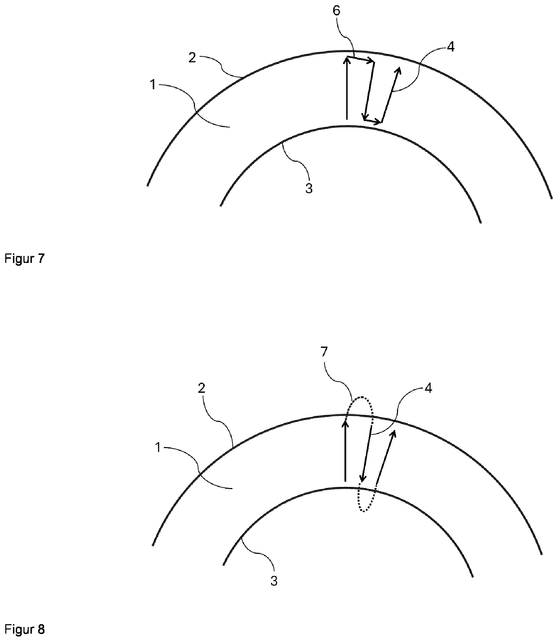

Figur 7 veranschaulicht eine Ausführungsform, in der zusätzlich zu den radialen Belichtungsstrecken 4 verbindende Belichtungsstrecken 6 vorliegen.

In einer beispielhaften Ausführungsform bestehen die Belichtungsstrecken aus den radialen Belichtungsstrecken und optional den verbindenden Belichtungsstrecken.

In einer bevorzugten Ausführungsform bestehen die Belichtungsstrecken aus den radialen Belichtungsstrecken.

Sofern die Belichtungsstrecken aus den radialen Belichtungsstrecken 4 bestehen, kann beispielsweise der Laserstrahl bei Erreichen eines der Endpunkte einer radialen Belichtungsstrecke 4 ausgeschaltet und der Laser im ausgeschalteten Zustand anschließend so bewegt und positioniert werden (z.B. in einer schleifenartigen Bewegung, die auch als "Skywriting" bezeichnet wird), dass der Laserstrahl nach der Einschaltung des Lasers auf einen der Endpunkte der benachbarten Belichtungsstrecke 4 gerichtet ist und über diese benachbarte Belichtungsstrecke 4 geführt werden kann. Diese beispielhafte Vorgehensweise wird in Figur 8 veranschaulicht. Die "Skywriting"-Schleife 7 des ausgeschalteten Lasers ist durch eine gestrichelte Linie symbolisiert.

In Schritt (a4) werden die Daten der Schritte (a1) bis (a3) an eine additive Fertigungsvorrichtung übertragen.

In Schritt (b) des erfindungsgemäßen Verfahrens erfolgt ein pulverbettbasiertes Laser- oder Elektronenstrahlschmelzen in der additiven Fertigungseinrichtung unter Herstellung des Metallrohrs, umfassend ein aufeinanderfolgendes schichtweises Aufbringen eines Metallpulvers, wobei in mindestens zwei aufeinanderfolgenden Schichten des Metallpulvers, bevorzugter in allen aufgebrachten Schichten des Metallpulvers, ein Schmelzen des Metallpulvers in definierten Bereichen der Schicht erfolgt, indem ein Laser- oder Elektronenstrahl über die in Schritt (a3) festgelegten Belichtungsstrecken geführt wird.

Additive Fertigungsvorrichtungen, die für ein pulverbettbasiertes Laser- oder Elektronenstrahlschmelzen geeignet sind, sind der Fachperson allgemein bekannt.

Das Schmelzen des Metallpulvers in definierten Bereichen der Schicht durch einen Laser- oder Elektronenstrahl unter Verwendung der in Schritt (a3) festgelegten Belichtungsstrecken umfasst beispielsweise folgende Schritte:
(b1) ein Aufbringen einer Schicht des Metallpulvers auf ein Substrat und ein Schmelzen des Metallpulvers in definierten Bereichen der Schicht, indem ein Laser- oder Elektronenstrahl über die in Schritt (a3) festgelegten Belichtungsstrecken geführt wird, so dass nach der Verfestigung des geschmolzenen Metallpulvers ein ringförmiges Segment des Metallrohrs erhalten wird,
(b2) nach der Verfestigung des geschmolzenen Metallpulvers ein Aufbringen einer weiteren Schicht des Metallpulvers auf die zuvor aufgebrachte Schicht und ein Schmelzen des Metallpulvers in definierten Bereichen der weiteren Schicht, indem der Laser- oder Elektronenstrahl über die in Schritt (a3) festgelegten Belichtungsstrecken geführt, so dass nach der Verfestigung des geschmolzenen Metallpulvers ein weiteres ringförmiges Segment des Metallrohrs erhalten wird,
(b3) optional ein ein- oder mehrfaches Wiederholen des Schritts (b2) unter Ausbildung weiterer ringförmiger Segmente des Metallrohrs bis zur Fertigstellung des Metallrohrs.

Wie oben bereits erwähnt, kann es im Rahmen der vorliegenden Erfindung bevorzugt sein, dass die Belichtungsstrecken aus den radialen Belichtungsstrecken und optional den verbindenden Belichtungsstrecken bestehen. In einer beispielhaften Ausführungsform erfolgt daher das Schmelzen des Metallpulvers in definierten Bereichen der Schicht ausschließlich, indem der Laser- oder Elektronenstrahl über die in Schritt (a3) festgelegten radialen Belichtungsstrecken und optional die verbindenden Belichtungsstrecken geführt wird. Bevorzugt erfolgt das Schmelzen des Metallpulver ausschließlich, indem der Laser- oder Elektronenstrahl über die in Schritt (a3) festgelegten radialen Belichtungsstrecken geführt wird.

Der Bereich der Schicht des Metallpulvers, der entlang einer radialen Belichtungsstrecke durch den Laser- oder Elektronenstrahl geschmolzen wird und sich anschließend wieder verfestigt, verkörpert eine Schmelzspur. Bevorzugt überlappen Schmelzspuren benachbarter radialer Belichtungsstrecken.

Das Metall des Metallpulvers ist beispielsweise ein elementares Edelmetall; eine Legierung, die ein oder mehrere Edelmetalle enthält (edelmetallhaltige Legierung); ein elementares Refraktärmetall oder eine Legierung, die ein oder mehrere Refraktärmetalle enthält (refraktärmetallhaltige Legierung). Die edelmetallhaltige Legierung ist bevorzugt eine Legierung, die ein Edelmetall als Hauptkomponente enthält. Die refraktärmetallhaltige Legierung ist bevorzugt eine Legierung, die ein Refraktärmetall als Hauptkomponente enthält. Die Hauptkomponente einer Legierung ist dasjenige Element, das in der Legierung in der höchsten Konzentration (in Atom-%) vorliegt. Beispielsweise enthält die edelmetallhaltige Legierung ein oder mehrere Edelmetalle in einer Gesamtkonzentration von mehr als 50 Atom-%. Beispielsweise enthält die refraktärmetallhaltige Legierung ein oder mehrere Refraktärmetalle in einer Gesamtkonzentration von mehr als 50 Atom-%.

Das Edelmetall ist beispielsweise ein Platinmetall, Gold oder Silber. Das Platinmetall ist beispielsweise Ruthenium, Rhodium, Palladium, Platin, Iridium oder Osmium.

Das Refraktärmetall ist beispielsweise Titan, Zirkonium, Hafnium, Vanadium, Wolfram, Niob, Tantal, Chrom oder Molybdän.

In einer beispielhaften Ausführungsform ist das Metall elementares Ruthenium oder eine rutheniumhaltige Legierung, die Ruthenium als Hauptkomponente und optional Rhodium enthält.

Das Metallpulver weist beispielsweise eine Partikelgrößenverteilung in Form einer Volumenverteilungssummenkurve mit einem d50-Wert (Median) im Bereich von 10 µm bis 100 µm, bevorzugter 30 µm bis 80 µm auf.

Die Partikelgrößenverteilung kann durch Laserbeugung bestimmt werden, wobei die Auswertung über die Mie-Theorie erfolgt und die Partikelgrößen in Form einer Volumenverteilungssummenkurve bestimmt werden. Die Dispergierung der Pulverpartikel erfolgt beispielsweise durch eine Trockendispergierung. Die Wellenlänge der Laserstrahlung beträgt beispielsweise 632,8 nm.

Das Substrat in Schritt (b1) ist beispielsweise eine Bauplatte der additiven Fertigungsvorrichtung oder eine zuvor aufgebrachte Pulverschicht.

Ein Schmelzen des Metallpulvers in definierten Bereichen der Schicht erfolgt, indem ein Laser- oder Elektronenstrahl über die in Schritt (a3) festgelegten Belichtungsstrecken geführt wird, so dass nach der Verfestigung des geschmolzenen Metallpulvers ein ringförmiges Segment des Metallrohrs erhalten wird.

In einer bevorzugten Ausführungsform wird ein Laserstrahl verwendet.

Eine geeignete Leistung eines Lasers oder einer Elektronenstrahlquelle, durch die ein Schmelzen des Metallpulvers realisiert wird, kann die Fachperson unter Berücksichtigung allgemeinen Fachwissens und gegebenenfalls durch Routineversuche ermitteln. Beispielsweise liegt die Laserleistung im Bereich von 100 W bis 300 W.

Einen geeigneten Fokusdurchmesser des Laser- oder Elektronenstrahls kann die Fachperson unter Berücksichtigung allgemeinen Fachwissens und gegebenenfalls durch Routineversuche ermitteln. Wird ein Laserstrahl verwendet, so liegt der Fokusdurchmesser beispielsweise im Bereich von 5 µm bis 200 µm, bevorzugter im Bereich von 20 µm bis 100 µm.

Eine geeignete Geschwindigkeit, mit der der Laser- oder Elektronenstrahl über die radialen Belichtungsstrecken geführt wird, kann die Fachperson unter Berücksichtigung allgemeinen Fachwissens und gegebenenfalls durch Routineversuche ermitteln. Beispielsweise wird der Laserstrahl mit einer Geschwindigkeit im Bereich von 200 mm/s bis 1000 mm/s, bevorzugter 300 mm/s bis 800 mm/s über die radialen Belichtungsstrecken geführt.

Optional kann die Energiedichte des Laserstrahls verändert werden, während der Laserstrahl über eine oder mehrere der radialen Belichtungsstrecken geführt wird. Eine Änderung der Energiedichte kann beispielsweise durch eine oder mehrere der folgenden Maßnahmen realisiert werden:
- Änderung der Laserleistung,
- Änderung der Geschwindigkeit, mit der der Laserstrahl über die radialen Belichtungsstrecken geführt wird,
- Änderung von einem kontinuierlichen zu einem gepulsten (alternativ: von einem gepulsten zu einem kontinuierlichen) Laserstrahl,
- Änderung der Pulsfrequenz des gepulsten Laserstrahl
- Änderung des Fokusdurchmessers des Laserstrahls.

Optional kann die Energiedichte des Elektronenstrahls verändert werden, während der Elektronenstrahl über eine oder mehrere der radialen Belichtungsstrecken geführt wird. Eine Änderung der Energiedichte kann beispielsweise durch eine oder mehrere der folgenden Maßnahmen realisiert werden:
- Änderung der Elektronenstrahlleistung,
- Änderung der Geschwindigkeit, mit der der Elektronenstrahl über die radialen Belichtungsstrecken geführt wird,
- Änderung des Fokusdurchmessers des Elektronenstrahls.

Eine geeignete Dicke der Pulverschicht kann die Fachperson unter Berücksichtigung allgemeinen Fachwissens und gegebenenfalls durch Routineversuche ermitteln. Beispielsweise liegt die Dicke der Pulverschicht im Bereich von 20 µm bis 150 µm. Aufeinanderfolgende Pulverschichten können übereinstimmende oder unterschiedliche Schichtdicken aufweisen.

Der den Laserstrahl erzeugende Laser ist beispielsweise ein Faserlaser. Im Rahmen der vorliegenden Erfindung können aber auch andere Lasertypen verwendet werden.

Das mit dem erfindungsgemäßen Verfahren hergestellte Metallrohr weist beispielsweise einen Innendurchmesser D_{MR-I} von mindestens 1,5 mm und einen Außendurchmesser D_{MR-A} von maximal 8,0 mm auf, wobei die Wand des Metallrohrs beispielsweise eine Dicke im Bereich von 0,3 mm bis 5,0 mm, bevorzugter 0,5 mm bis 2,0 mm aufweist. Das Metallrohr weist beispielsweise eine Höhe H_{MR} von bis zu 200 mm auf.

Die vorliegende Erfindung betrifft außerdem ein Computerprogramm, umfassend Befehle, die bei der Ausführung des Programms durch einen Computer diesen veranlassen, die oben beschriebenen Schritte (a1) bis (a3) durchzuführen. Optional wird auch die Durchführung des Schritts (a4) bewirkt, d.h. Übertragung der Daten der Schritte (a1) bis (a3) an eine additive Fertigungsvorrichtung, die eine Laser- oder Elektronenstrahlquelle und Mittel zum schichtweisen Auftragen eines Metallpulvers umfasst.

### Beispiele

### Erfindungsgemäßes Beispiel EB1

Es wurde ein 3D-Modell eines Hohlzylinders festgelegt. Senkrecht zur Zylinderachse wies der Hohlzylinder eine Querschnittsfläche auf, die durch eine kreisförmige Innenkonturlinie und eine kreisförmige Außenkonturlinie begrenzt war. Da das Zerlegen des 3D-Modells des Hohlzylinders in virtuelle Schichten senkrecht zur Zylinderachse erfolgte, wiesen die in den virtuellen Schichten festgelegten Hohlzylinderquerschnitte eine kreisförmige Innenkonturlinie und eine kreisförmige Außenkonturlinie auf. Der Durchmesser der kreisförmigen Innenkonturlinie betrug 2,3 mm und der Durchmesser der kreisförmigen Außenkonturlinie betrug 4,1 mm (d.h. Wanddicke des Hohlzylinders: 0,5 × (4,1 mm - 2,3 mm) = 0,9 mm).

Es wurden rechnergestützt Belichtungsstrecken für jede virtuelle Schicht festgelegt, die ausschließlich aus radialen Belichtungsstrecken bestanden. Jede virtuelle Schicht umfasst 240 radiale Belichtungsstrecken. Jede der radialen Belichtungsstrecken in einer der virtuellen Schicht genügte der folgenden Bedingung: Die radiale Belichtungsstrecke schneidet sich nicht mit einer ihrer benachbarten radialen Belichtungsstrecken, aber eine gedachte Verlängerung der radialen Belichtungsstrecke und eine gedachte Verlängerung mindestens einer ihrer benachbarten radialen Belichtungsstrecken schneiden sich in einem Schnittpunkt S, der innerhalb der von der inneren Konturfläche umschlossenen Fläche liegt. In dem erfindungsgemäßen Beispiel EB1 waren die radialen Belichtungsstrecken so zueinander positioniert, dass unterschiedliche Schnittpunkte erhalten wurden, wie dies in Figur 2 veranschaulicht ist.

Das für die additive Fertigung verwendete Metallpulver war eine rutheniumbasierte Legierung. Das Pulver wies Partikelgrößen im Bereich von etwa 30 bis 65 µm auf. Das pulverbettbasierte Strahlschmelzen erfolgte mit einem Laserstrahl (Laserleistung im Bereich von 160-190 W; Fokusdurchmesser des Laserstrahls: 55 µm; Wellenlänge: 1070 nm).

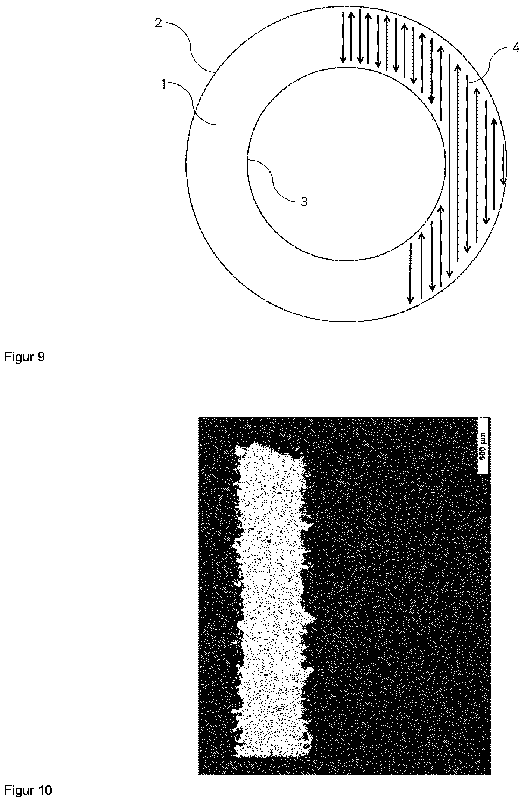

Für die additive Fertigung wurde der Laserstrahl in jeder der aufgebrachten Pulverschichten über die festgelegten Belichtungsstrecken geführt, so dass in den bestrahlten Bereichen das Pulver zunächst schmolz und sich anschließend wieder verfestigte. In jeder Schicht wurde somit ein ringförmiges Segment des Rohres erhalten. Figur 10 zeigt einen Schnitt durch die Rohrwand. Wie aus Figur 10 ersichtlich ist, wurde unter Verwendung der erfindungsgemäßen radialen Belichtungsstrecken eine im Wesentlichen porenfreie Rohrwand erhalten.

### Vergleichsbeispiel VB1

In Vergleichsbeispiel VB1 wurde ein 3D-Modell eines Hohlzylinders festgelegt, das dem 3D-Modell des erfindungsgemäßen Beispiels EB1 entsprach. Auch die Zerlegung des 3D-Modells in virtuelle Schichten wurde so wie in Beispiel EB1 vorgenommen.

Es wurden rechnergestützt Belichtungsstrecken festgelegt, die ausschließlich aus parallel verlaufenden Belichtungsstrecken bestanden. Eine solche Anordnung paralleler Belichtungsstrecken ist in Figur 9 veranschaulicht.

Das für die additive Fertigung verwendete Metallpulver entsprach dem in Beispiel EB1 verwendeten Pulver (d.h. eine rutheniumbasierte Legierung mit Partikelgrößen im Bereich von etwa 30 bis 65 µm). In Übereinstimmung mit dem erfindungsgemäßen Beispiel EB1 erfolgte das pulverbettbasierte Strahlschmelzen mit einem Laserstrahl (Laserleistung im Bereich von 160-190 W; Fokusdurchmesser des Laserstrahls: 55 µm; Wellenlänge: 1070 nm).

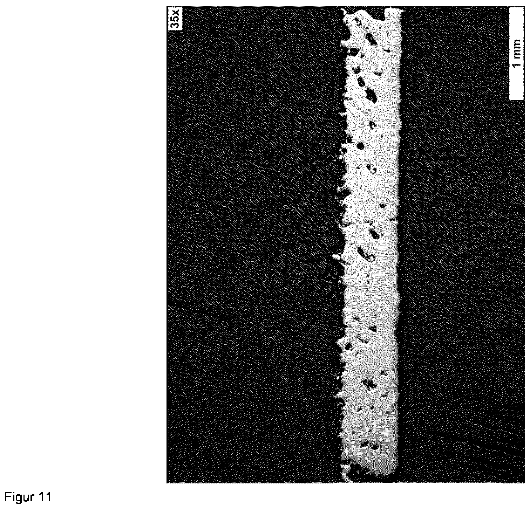

Für die additive Fertigung wurde der Laserstrahl in jeder der aufgebrachten Pulverschichten über die festgelegten Belichtungsstrecken geführt, so dass in den bestrahlten Bereichen das Pulver zunächst schmolz und sich anschließend wieder verfestigte. In jeder Schicht wurde somit ein ringförmiges Segment des Rohres erhalten. Figur 11 zeigt einen Schnitt durch die Rohrwand. Wie aus Figur 11 ersichtlich ist, wurde unter Verwendung der parallel verlaufenden Belichtungsstrecken eine Rohrwand erhalten, die eine Vielzahl von Poren aufwies.

### Liste der Bezugszeichen:

- 1: Querschnittsfläche des Hohlzylinders
- 2: Äußere Konturlinie
- 3: Innere Konturlinie
- 4: radiale Belichtungsstrecke
- 4.1, 4.2: radiale Belichtungsstrecken in zwei aufeinanderfolgenden Schichten
- 5: gedachte Verlängerung einer radialen Belichtungsstrecke
- 6: verbindende Belichtungsstrecke
- 7: Skywriting-Schleife
- S: Schnittpunkt zwischen gedachten Verlängerungen benachbarter radialer Belichtungsstrecken
- P: Endpunkte einer radialen Belichtungsstrecke
- Θ: Schnittwinkel zwischen gedachten Verlängerungen benachbarter radialer Belichtungsstrecken

## Patentansprüche

1. Ein Verfahren zur Herstellung eines Metallrohrs, umfassend
(a) eine rechnergestützte Bereitstellung und Übermittlung von Daten, umfassend
(a1) eine Bereitstellung eines 3D-Modells eines Hohlzylinders,
(a2) eine Zerlegung des 3D-Modells des Hohlzylinders in einzelne virtuelle Schichten, wobei jede virtuelle Schicht eine Querschnittsfläche des Hohlzylinders umfasst und die Querschnittsfläche durch eine äußere Konturlinie und eine innere Konturlinie begrenzt ist,
(a3) ein Festlegen von Belichtungsstrecken für die Querschnittsflächen des Hohlzylinders in den virtuellen Schichten, wobei die Belichtungsstrecken in mindestens zwei aufeinanderfolgenden virtuellen Schichten radiale Belichtungsstrecken umfassen und jede radiale Belichtungsstrecke der folgenden Bedingung genügt:
- die radiale Belichtungsstrecke wird durch zwei Endpunkte P begrenzt und eine gedachte Verlängerung der radialen Belichtungsstrecke ist eine Gerade, die durch die Endpunkte P verläuft,
- die radiale Belichtungsstrecke liegt zwischen zwei zu ihr benachbarten radialen Belichtungsstrecken, wobei sich die radiale Belichtungsstrecke nicht mit ihren benachbarten radialen Belichtungsstrecken schneidet, aber die gedachte Verlängerung der radialen Belichtungsstrecke und die gedachte Verlängerung mindestens einer ihrer beiden benachbarten radialen Belichtungsstrecken sich in einem Schnittpunkt S schneiden, wobei der Schnittpunkt S innerhalb der von der inneren Konturlinie umschlossenen Fläche liegt
(a4) eine Übertragung der Daten der Schritte (a1) bis (a3) an eine additive Fertigungsvorrichtung,
(b) ein pulverbettbasiertes Laser- oder Elektronenstrahlschmelzen in der additiven Fertigungseinrichtung unter Herstellung des Metallrohrs, umfassend ein aufeinanderfolgendes schichtweises Aufbringen eines Metallpulvers, wobei in mindestens zwei aufeinanderfolgenden Schichten des Metallpulvers ein Schmelzen des Metallpulvers in definierten Bereichen der Schicht erfolgt, indem ein Laser- oder Elektronenstrahl über die in Schritt (a3) festgelegten Belichtungsstrecken geführt wird.

2. Das Verfahren nach Anspruch 1, wobei der Hohlzylinder ein kreisförmiger oder ellipsenförmiger Hohlzylinder ist.

3. Das Verfahren nach Anspruch 1 oder 2, wobei die äußere Konturlinie und innere Konturlinie der Querschnittsfläche des Hohlzylinders einen Abstand von 0,3 mm bis 5,0 mm, bevorzugter 0,5 mm bis 2,0 mm voneinander aufweisen.

4. Das Verfahren nach einem der vorstehenden Ansprüche, wobei für mindestens 60%, bevorzugter mindestens 80% der radialen Belichtungsstrecken einer virtuellen Schicht gilt, dass sich ihre gedachte Verlängerung mit den gedachten Verlängerungen ihrer beiden benachbarten radialen Belichtungsstrecken in einem gemeinsamen Schnittpunkt S oder in separaten Schnittpunkten S schneidet.

5. Das Verfahren nach einem der vorstehenden Ansprüche, wobei sich die gedachte Verlängerung der radialen Belichtungsstrecke und die gedachte Verlängerung mindestens einer ihrer beiden benachbarten radialen Belichtungsstrecken in dem Schnittpunkt S unter einem Schnittwinkel θ schneiden, wobei der Schnittwinkel θ maximal 8° beträgt.

6. Das Verfahren nach einem der vorstehenden Ansprüche, wobei die von der inneren Begrenzungslinie umschlossene Fläche und die von der äußeren Begrenzungslinie umschlossene Fläche einen gemeinsamen Mittelpunkt M aufweisen und jeder Schnittpunkt S, in dem sich die gedachte Verlängerung einer der radialen Belichtungsstrecken und die gedachte Verlängerung mindestens einer ihrer benachbarten radialen Belichtungsstrecken schneiden, mit dem Mittelpunkt M zusammenfällt oder vom Mittelpunkt M einen Abstand d(S-M) aufweist, wobei d(S-M) der folgenden Bedingung genügt:
d(S-M) ≤ 0,8 × dₘᵢₙ; wobei dₘᵢₙ der minimale Abstand des Mittelpunkts M zur inneren Konturlinie ist.

7. Das Verfahren nach einem der vorstehenden Ansprüche, wobei für jede radiale Belichtungsstrecke gilt, dass einer der beiden Endpunkte auf der inneren Konturlinie liegt oder zu der inneren Konturlinie einen Abstand d₁ aufweist und der andere Endpunkt auf der äußeren Konturlinie liegt oder zu der äußeren Konturlinie einen Abstand d₂ aufweist, wobei d₁ ≤ 5 × d_{LF} und d₂ ≤ 5 × d_{LF} und d_{LF} ein Fokusdurchmesser eines in Schritt (b) zu verwendenden Laser- oder Elektronenstrahls ist.

8. Das Verfahren nach einem der vorstehenden Ansprüche, wobei die radialen Belichtungsstrecken in unmittelbar aufeinanderfolgenden virtuellen Schichten so angeordnet sind, dass in einer Draufsicht auf die virtuellen Schichten sich die radialen Belichtungsstrecken nicht schneiden, wobei jede radiale Belichtungsstrecke der einen virtuellen Schicht zwischen zwei zueinander benachbarten radialen Belichtungsstrecken der anderen virtuellen Schicht liegt.

9. Das Verfahren nach einem der vorstehenden Ansprüche, wobei die Belichtungsstrecken aus den radialen Belichtungsstrecken bestehen.

10. Das Verfahren nach einem der Ansprüche 1 bis 8, wobei die Belichtungsstrecken neben den radialen Belichtungsstrecken verbindende Belichtungsstrecken umfassen, wobei eine verbindende Belichtungsstrecke den Endpunkt einer radialen Belichtungsstrecke mit dem nächstgelegenen Endpunkt einer ihrer benachbarten radialen Belichtungsstrecken verbindet.

11. Das Verfahren nach Anspruch 10, wobei von einer radialen Belichtungsstrecke nicht mehr als zwei verbindende Belichtungsstrecken ausgehen und von einem Endpunkt einer radialen Belichtungsstrecke nicht mehr als eine verbindende Belichtungsstrecke ausgeht.

12. Das Verfahren nach einem der vorstehenden Ansprüche, wobei das Schmelzen des Metallpulvers in definierten Bereichen der Schicht durch einen Laser- oder Elektronenstrahl unter Verwendung der in Schritt (a3) festgelegten Belichtungsstrecken folgende Schritte umfasst:
(b1) ein Aufbringen einer Schicht des Metallpulvers auf ein Substrat und ein Schmelzen des Metallpulvers in definierten Bereichen der Schicht, indem ein Laser- oder Elektronenstrahl über die in Schritt (a3) festgelegten Belichtungsstrecken geführt wird, so dass nach der Verfestigung des geschmolzenen Metallpulvers ein ringförmiges Segment des Metallrohrs erhalten wird,
(b2) nach der Verfestigung des geschmolzenen Metallpulvers ein Aufbringen einer weiteren Schicht des Metallpulvers auf die zuvor aufgebrachte Schicht und ein Schmelzen des Metallpulvers in definierten Bereichen der weiteren Schicht, indem der Laser- oder Elektronenstrahl über die in Schritt (a3) festgelegten Belichtungsstrecken geführt, so dass nach der Verfestigung des geschmolzenen Metallpulvers ein weiteres ringförmiges Segment des Metallrohrs erhalten wird,
(b3) optional ein ein- oder mehrfaches Wiederholen des Schritts (b2) unter Ausbildung weiterer ringförmiger Segmente des Metallrohrs bis zur Fertigstellung des Metallrohrs.

13. Das Verfahren nach einem der vorstehenden Ansprüche, wobei das Metall des Metallpulvers ein elementares Edelmetall; eine Legierung, die ein oder mehrere Edelmetalle enthält; ein elementares Refraktärmetall oder eine Legierung, die ein oder mehrere Refraktärmetalle enthält, ist.

14. Ein Computerprogramm, umfassend Befehle, die bei der Ausführung des Programms durch einen Computer diesen veranlassen, die Schritte (a1) bis (a3) gemäß einem der Ansprüche 1 bis 11 durchzuführen.
